(19) Europäisches Patentamt

European Patent Office

Office européen des brevets

(11) **EP 3 099 073 A1**

(12) **EUROPEAN PATENT APPLICATION**

(43) Date of publication:
**30.11.2016 Bulletin 2016/48**

(51) Int Cl.:
**H04N 19/30** *(2014.01)*      **H04N 19/98** *(2014.01)*

(21) Application number: **15305795.5**

(22) Date of filing: **27.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
- **Leleannec, Fabrice**
  **35576 CESSON SEVIGNE (FR)**
- **Lasserre, Sebastien**
  **35576 CESSON SEVIGNE (FR)**
- **Bordes, Philippe**
  **35576 CESSON SEVIGNE (FR)**

(74) Representative: **Huchet, Anne**
**TECHNICOLOR**
**1-5, rue Jeanne d'Arc**
**92130 Issy-les-Moulineaux (FR)**

(54) **METHOD AND DEVICE OF ENCODING/DECODING A HDR AND A SDR PICTURE IN/FROM A SCALABLE BITSTREAM**

(57)    The present disclosure generally relates to a method and device of encoding both a high dynamic range (HDR) picture ($I_{HDR}$) and a first standard dynamic range (SDR) picture ($I_{SDR1}$) into a scalable bitstream (F) having a base layer and an enhancement layer. The method comprises:
- encoding (1030) said first SDR picture ($I_{SDR1}$) in the base layer of the scalable bitstream (F);
- obtaining (1000) a second SDR picture ($I_{SDR2}$) from the HDR picture by reducing the dynamic of the HDR picture ($I_{HDR}$);
- encoding (ELENC), in the enhancement layer of the scalable bitstream (F), the second SDR picture by using a predictor obtained from a decoded version of the first SDR picture ($I_{SDR1}$),
characterized in that it further comprises:
- mapping (12) a luminance component (L) and chrominance (C1, C2) components obtained from the HDR picture onto a second luminance component (L") and two second chrominance components (C"1, C"2) in order that the gamut of colors obtained from said second luminance (L") and chrominance (C"1, C"2) components maps onto the gamut of the colors of the HDR picture to be encoded.

    The disclosure relates also to a method and device for decoding a scalable bitstream.

Fig. 1 – Prior Art

EP 3 099 073 A1

**Description**

**1. Field**

The present principles generally relates to picture/video encoding and decoding. Particularly, but not exclusively, the technical field of the present principles is related to encoding/decoding of both a picture whose pixels values belong to a high-dynamic range and a picture whose pixels values belong to a low-dynamic range.

**2. Background**

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

In the following, a picture contains one or several arrays of samples (pixel values) in a specific picture/video format which specifies all information relative to the pixel values of a picture (or a video) and all information which may be used by a display and/or any other device to visualize and/or decode a picture (or video) for example. A picture comprises at least one component, in the shape of a first array of samples, usually a luma (or luminance) component, and, possibly, at least one other component, in the shape of at least one other array of samples, usually a color component. Or, equivalently, the same information may also be represented by a set of arrays of color samples, such as the traditional tri-chromatic RGB representation.

A pixel value is represented by a vector of C values, where C is the number of components. Each value of a vector is represented with a number of bits which defines a maximal dynamic range of the pixel values.

Standard-Dynamic-Range pictures (SDR pictures) are color pictures whose luminance values are represented with a limited dynamic usually measured in power of two or f-stops. SDR pictures have a dynamic range, also called a dynamic in the following, around 10 f-stops, i.e. a ratio 1000 between the brightest pixels and the darkest pixels in the linear domain, and are coded with a limited number of bits (most often 8 or 10 in HDTV (High Definition Television systems) and UHDTV (Ultra-High Definition Television systems) in a non-linear domain, for instance by using the ITU-R BT.709 OETF (Optico-Electrical-Transfer-Function) (Rec. ITU-R BT.709-5, April 2002) or ITU-R BT.2020 OETF (Rec. ITU-R BT.2020-1, June 2014) to reduce the dynamic. This limited non-linear representation does not allow correct rendering of small signal variations, in particular in dark and bright luminance ranges. In High-Dynamic-Range pictures (HDR pictures), the signal dynamic is much higher (up to 20 f-stops, a ratio one million between the brightest pixels and the darkest pixels) and a new non-linear representation is needed in order to maintain a high accuracy of the signal over its entire range. In HDR pictures, raw data are usually represented in floating-point format (either 32-bit or 16-bit for each component, namely float or half-float), the most popular format being openEXR half-float format (16-bit per RGB component, i.e. 48 bits per pixel) or in integers with a long representation, typically at least 16 bits.

A color gamut is a certain complete set of colors. The most common usage refers to a set of colors which can be accurately represented in a given circumstance, such as within a given color space or by a certain output device.

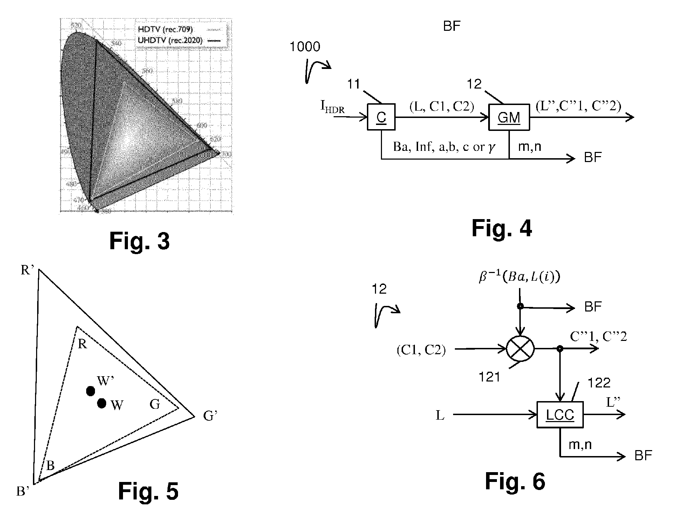

A color gamut is sometimes defined by RGB primaries provided in the CIE1931 color space chromaticity diagram and a white point as illustrated in **Fig. 3.**

It is common to define primaries in the so-called CIE1931 color space chromaticity diagram. This is a two dimensional diagram (x,y) defining the colors independently on the luminance component. Any color XYZ is then projected in this diagram using the transform:

$$\begin{cases} x = \dfrac{X}{X+Y+Z} \\ y = \dfrac{Y}{X+Y+Z} \end{cases}$$

The z=1-x-y component is also defined but carry no extra information.

A gamut is defined in this diagram by the triangle whose vertices are the set of (x,y) coordinates of the three primaries RGB. The white point W is another given (x,y) point belonging to the triangle, usually close to the triangle center.

A color volume is defined by a color space and a dynamic range of the values represented in said color space.

For example, a color gamut is defined by a RGB ITU-R Recommendation BT.2020 color space for UHDTV. An older standard, ITU-R Recommendation BT.709, defines a smaller color gamut for HDTV. In SDR, the dynamic range is defined officially up to 100 nits (candela per square meter) for the color volume in which data are coded, although some display technologies may show brighter pixels.

As explained extensively in "A Review of RGB Color Spaces" by Danny Pascale, a change of gamut, i.e. a transform that maps the three primaries and the white point from a gamut to another, can be performed by using a 3x3 matrix in the linear RGB color space. Also, a change of space from XYZ to RGB is performed by a 3x3 matrix. As a consequence, regardless of whether RGB or XYZ is the color space, a change of gamut can be performed by a 3x3 matrix. For example, a gamut change from BT.2020 linear RGB to BT.709 XYZ can be performed by a 3x3 matrix.

High Dynamic Range pictures (HDR pictures) are color pictures whose luminance values are represented with a HDR dynamic that is higher than the dynamic of a SDR picture.

The HDR dynamic is not yet defined by a standard but one may expect a dynamic range up to a few thousands nits. For instance, a HDR color volume is defined by a RGB BT.2020 color space and the values represented in said RGB color space belong to a dynamic range from 0 to 4000 nits. Another example of HDR color volume is defined by a RGB BT.2020 color space and the values represented in said RGB color space belong to a dynamic range from 0 to 1000 nits.

Color-grading a picture (or a video) is a process of altering/enhancing the colors of the picture (or the video). Usually, color-grading a picture involves a change of the color volume (color space and/or dynamic range) or a change of the color gamut relative to this picture. Thus, two different color-graded versions of a same picture are versions of this picture whose values are represented in different color volumes (or color gamut) or versions of the picture whose at least one of their colors has been altered/enhanced according to different color grades. This may involve user interactions.

For example, in cinematographic production, a picture (of a video) is captured using tri-chromatic cameras into RGB color values composed of 3 components (Red, Green and Blue). The RGB color values depend on the tri-chromatic characteristics (color primaries) of the sensor.

A HDR color-graded version of the captured picture (or video) is then obtained in order to get theatrical renders (using a specific theatrical grade). Typically, the values of the first color-graded version of the captured picture (or video) are represented according to a standardized YUV format such as BT.2020 which defines parameter values for UHDTV.

The YUV format is typically performed by applying a non-linear function, so called Optical Electronic Transfer Function (OETF) on the linear RGB components to obtain non-linear components R'G'B', and then applying a color transform (usually a 3x3 matrix) on the obtained non-linear R'G'B' components to obtain the three components YUV. The first component Y is a luminance component and the two components U,V are chrominance components.

Then, a Colorist, usually in conjunction with a Director of Photography, performs a control on the color values of the first color-graded version of the captured picture (or video) by fine-tuning/tweaking some color values in order to instill an artistic intent.

A color-graded SDR version of the captured picture (or video) is also usually obtained in order to get home renders (using a specific home grade). Typically, the values of the color-graded SDR picture (or video) are represented according to a standardized YUV format such as BT.709 which defines parameter values for HDTV.

Then, the Colorist performs also a control on the color values of the color-graded SDR picture by fine-tuning/tweaking some color values in order to instill an artistic intent.

The problem to be solved is the distribution of both the HDR and SDR color-graded versions of the captured picture (or video), i.e. the distribution of a compressed HDR picture (or video) representative of a color-graded version of a captured picture (or video) while, at the same time, distributing an associated SDR picture (or video) representative of a color-graded SDR version of said captured picture (or video).

A trivial solution is simulcasting both these HDR and SDR color-graded pictures (or videos) on distribution infrastructure. The drawback of this solution is to virtually double the needed bandwidth compared to a legacy infrastructure adapted to broadcast a SDR picture (or video) such as HEVC main 10 profile ("High Efficiency Video Coding", SERIES H: AUDIOVISUAL AND MULTIMEDIA SYSTEMS, Recommendation ITU-T H.265, Telecommunication Standardization Sector of ITU, October 2014).

Using a legacy distribution infrastructure is a requirement to accelerate the emergence of the distribution of HDR pictures (or video). Also, the bitrate shall be minimized while ensuring good quality of both HDR and SDR pictures (or videos).

Moreover, full backward compatibility may be ensured, i.e. users equipped with legacy decoder and display have an experience close to the artist intent, i.e. the color grade (possibly modified by the Colorist) of the SDR picture is preserved.

Another straightforward solution is to reduce the dynamic range of the HDR picture (or video) by a suitable non-linear function, typically into a limited number of bits (say 10 bits), and to compress the reduced-dynamic version of the HDR picture by the HEVC main10 profile. Such non-linear function (curve) already exists like the so-called PQ EOTF proposed at SMPTE (SMPTE standard: High Dynamic Range Electro-Optical Transfer Function of Mastering Reference Displays, SMPTE ST 2084:2014).

The drawback of this solution is the lack of full backward compatibility because the obtained reduced-dynamic version of the picture (video) does not preserve the color grade of the SDR picture as wished by the Colorist.

Scalable Video Coding (e.g. SHVC as defined in Annex H of document "High Efficiency Video Coding", SERIES H: AUDIOVISUAL AND MULTIMEDIA SYSTEMS, Recommendation ITU-T H.265, Telecommunication Standardization Sector of ITU, October 2014) is another solution, especially when the color spaces and/or the color gamuts of the HDR and SDR pictures are different.

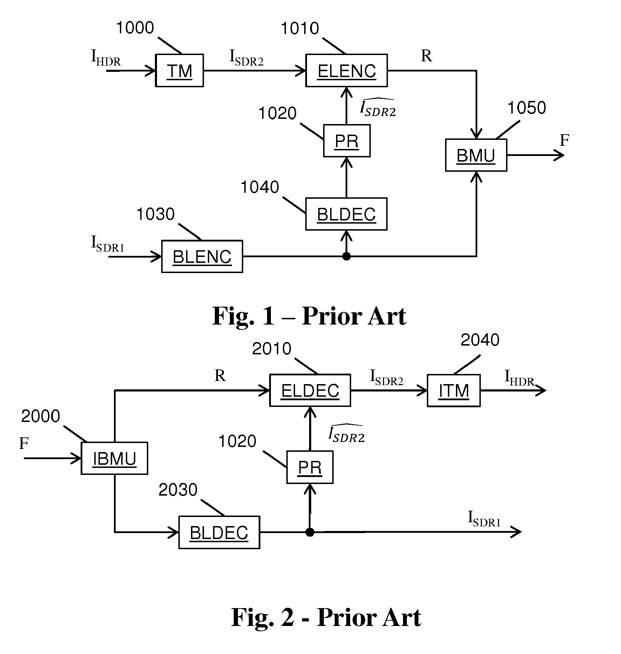

Fig. 1 illustrates the principles of a scalable video encoding scheme used for encoding both a HDR picture $I_{HDR}$ and a SDR picture $I_{SDR1}$ in a scalable bitstream F having a base layer BL and an enhancement layer EL.

Basically, in step 1030, a module BLENC encodes the SDR picture $I_{SDR1}$ in the base layer BL.

In step 1040, a module BLDEC decodes the encoded picture $I_{SDR1}$.

In step 1000, a module TM obtains a second SDR picture $I_{SDR2}$ from the HDR picture $I_{HDR}$ by reducing the dynamic of the HDR picture $I_{HDR}$. For example, the PQ EOTF is applied to the HDR picture.

In step 1020, a module PR obtains a predictor $\widehat{I_{SDR2}}$ of the second SDR picture $I_{SDR2}$ by adapting, possibly, the spatial resolution, color bit-depth and/or color gamut of a decoded version of the encoded SDR picture $I_{SDR1}$ to the spatial resolution, color bit-depth and/or color gamut of the enhancement layer EL.

The module PR may comprise the Color Gamut Scalability (CGS) process as defined in SHVC ("Color Gamut Scalable Video Coding for SHVC, P. Bordes et al., PCS , IEE 2013) in order to adapt the color gamuts.

In brief, the CGS uses a 3D LUT (Look-Up-Table) to convert/predict the tri-chromatic samples from the color space of the base layer BL to the color space of the enhancement layer EL. More precisely, the 3D LUT can be considered as a sub-sampling of the 3D color space of the base layer BL, where each vertex of the 3D LUT is associated with a color triplet corresponding to the color space of the enhancement layer EL and the prediction of a given color sample of the color space of the base layer BL is given by tri-linear interpolations.

The module PR may also up-scale the decoded version of the encoded SDR picture $I_{SDR1}$ in order to adapt the spatial resolution.

The module PR may further comprise luma and chroma sample scaling operations in order to adapt the color bit-depth.

The module PR may further comprise some inter-layer prediction of prediction mode, reference picture index and motion vector information, as specified by section H8.1.4.2 of SHVC ("High Efficiency Video Coding", SERIES H: AUDIOVISUAL AND MULTIMEDIA SYSTEMS, Recommendation ITU-T H.265, Telecommunication Standardization Sector of ITU, October 2014,).

In step 1010, a module ELENC predictive-encodes, in the enhancement layer EL, the second SDR picture $I_{SDR2}$ by using, among others, the predictor $\widehat{I_{SDR2}}$.

Predictive-encoding, in the enhancement layer EL, means, for example, encoding of an enhancement picture (a picture in the EL) that employs, in addition to classical HEVC temporal and spatial prediction, so-called inter-layer prediction. Inter-layer prediction in SHVC may apply to texture data or motion information. It includes spatial re-sampling of texture and motion data in case of spatial scalability. In addition, SHVC support so-called Color Gamut Scalability (CGS), which aims at inter-layer prediction when two video scalability layers correspond to two versions of the same video in different color gamuts. It involves inter-layer luma and chroma samples with the help of 3D lookup tables (see article "The Scalable Extensions of HEVC for Ultra-High-Definition Video Delivery", MultiMedia, IEEE (Volume:21 , Issue: 3), Yan Ye, Andrivon, P".

Secondly, SHVC inter-layer prediction also supports color bit-depth adaptation from the base layer to match the bit-depth of the enhancement layer picture samples.

For each coding unit to encode, the SHVC encoder performs a rate-distortion optimized coding mode decision between coding modes present in the HEVC standard and inter-layer prediction mode of SHVC.

In figure 1, the predictor $\widehat{I_{SDR2}}$ represents the set of prediction data output from the base layer decoder BLDEC, and resulting from SHVC inter-layer prediction.

In step 1050, a module BMU multiplexes the base and enhancement layers in a same scalable bitstream F.

Fig. 2 illustrates the principles of a scalable video decoding scheme for decoding a HDR picture $I_{HDR}$ and/or a SDR picture $I_{SDR1}$ from a scalable bitstream having a base layer BL and an enhancement layer EL.

Basically, in step 2000, a module IBMU obtains a base layer BL and an enhancement layer EL by de-multiplexing a scalable bitstream F.

In step 2030, a module BLDEC obtains a decoded SDR picture $I_{SDR1}$ by decoding the base layer BL.

In step 1020, a module PR obtains a predictor $\widehat{I_{SDR2}}$ from the decoded SDR picture $I_{SDR1}$ as explained above. The module PR may adapt, possibly, the spatial resolution, color bit-depth and/or color gamut of the decoded SDR picture $I_{SDR1}$ to the spatial resolution, color bit-depth and/or color gamut of the enhancement layer.

Adapting the spatial resolution, color bit-depth or color gamut is the same process that is used in the encoding scheme.

In step 2010, a module ELDEC predictive-decodes a second SDR picture $I_{SDR2}$ by using the predictor $\widehat{I_{SDR2}}$.

Predictive-decoding a picture by using a predictor means, for example, the decoding of an enhancement picture, employs, in addition to classical HEVC temporal and spatial prediction, so-called inter-layer prediction. In the same way as for the encoder, inter-layer prediction in SHVC decoder applies to texture data, motion information, color gamut and, if relevant, color bit-depth. It includes spatial re-sampling of texture and motion data in case of spatial scalability.

The prediction mode used for each coding unit to decode is signaled in the SHVC bitstream through dedicated SHVC syntax elements (see Annex H of document "High Efficiency Video Coding", SERIES H: AUDIOVISUAL AND MULTIMEDIA SYSTEMS, Recommendation ITU-T H.265, Telecommunication Standardization Sector of ITU, October 2014).

In step 2040, a module ITM obtains the HDR picture from the decoded second SDR picture $I_{SDR2}$ by increasing the dynamic of the decoded second SDR picture $I_{SDR2}$. For example, the PQ OETF is applied on the decoded second SDR picture $I_{SDR2}$.

The drawback of such a solution is that the correlation between the base and enhancement layers is low, i.e. between the SDR picture $I_{SDR2}$ and its predictor, making the inter-layer prediction inefficient for the scalable video compression.

The present principles has been devised with the foregoing in mind.

## 3. Summary

The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy at least one of the drawbacks of the prior art with a method of encoding both a high dynamic range (HDR) picture and a first standard dynamic range (SDR) picture into a scalable bitstream having a base layer and an enhancement layer, the method comprising:

- encoding said first SDR picture in the base layer of the scalable bitstream;
- obtaining a second SDR picture from the HDR picture by reducing the dynamic of the HDR picture;
- encoding, in the enhancement layer of the scalable bitstream, the second SDR picture by using a predictor obtained from a decoded version of the first SDR picture.

The method further comprises:

- mapping a luminance component and chrominance components obtained from the HDR picture onto a second luminance component and two second chrominance components in order that the gamut of colors obtained from said second luminance and chrominance components maps onto the gamut of the colors of the HDR picture to be encoded.

The method ensures full backward compatibility because the color-graded version of the SDR picture (first SDR picture typically as wished by a Colorist) is directly encoded and decoded.

It may further appear that the colors of a SDR picture obtained by combining a luminance component and two chrominance components representing a SDR version of a HDR color picture do not preserve hue and perceived saturation of the colors of said HDR color picture. This is the case when the PQ-EOTF is used for example.

Mapping the luminance and chrominance components of such SDR picture onto second luminance and chrominance components in order that the gamut of colors of a second SDR picture, obtained from said second luminance and chrominance components, maps onto the gamut of the colors of the HDR picture to be encoded, corrects the hue and perceived saturation relatively to said HDR color picture. The hue and perceived saturation of the colors of the HDR picture are thus preserved. The colors of the second SDR picture are thus visually closed to the colors of the HDR picture increasing then the overall visual quality of the decoded SDR picture whose perceived colors match the original HDR better. As a result (side effect), the mapped $I_{SDR2}$ picture is likely to be much more correlated to the first SDR picture $I_{SDR1}$. This increased correlation may not only concern texture information (pixel values respectively in $I_{SDR1}$ and $I_{SDR2}$), but may also apply to any type of information involved in the inter-layer prediction that takes place when coding two different video layers, with the considered scalable encoder. For example, motion information, may be affected.

According to a H.264/SVC ("Overview of the Scalable Video Coding

Extension of the H.264/AVC Standard", Heiko Schwarz, Detlev Marpe, and Thomas Wiegand, IEEE TRANSACTIONS ON CIRCUITS AND SYSTEMS FOR VIDEO TECHNOLOGY, VOL. 17, NO. 9, SEPTEMBER 2007)like scalable encoding/decoding scheme, temporal residual data is also inter-layer predicted. The increased correlation between the two layers may further improve the efficiency of the inter-layer prediction of temporal residuals as well.

The dynamic of the residual then decreases and the predictive-encoding performance increases.

According to an embodiment, mapping the luminance and chrominance components onto a second luminance component and two second chrominance components comprises:

- obtaining the two second chrominance components by scaling each of the two chrominance components by a first factor that depends on a modulation value obtained from the luminance component, and the value of each pixel of the luminance component; and
- obtaining the second luminance component by linearly combining the luminance component and the two second chrominance components.

According to an embodiment, the values of the second luminance component are lower than the corresponding values of the luminance component.

According to an embodiment, linearly combining the luminance component and the two second chrominance components uses coefficients which are added to a bitstream.

According to an embodiment, obtaining a luminance component and two chrominance components from the HDR picture to be encoded comprises:

- obtaining a luminance component by applying a non-linear function, that depends on a modulation value obtained from the luminance of the HDR picture, on the luminance of the HDR picture, in order that the dynamic of said luminance component is reduced compared to the dynamic of the luminance of the HDR picture;
- obtaining two chrominance components by:

  - obtaining at least one intermediate color component by scaling each color component of the HDR picture to be encoded by a second factor that depends on the luminance component; and
  - obtaining said two chrominance components from said at least one intermediate color component.

According to an embodiment, the first factor is obtained by minimizing a gamut distortion calculated between the gamut of the colors obtained from the second luminance and chrominance components and the gamut of the colors of the HDR picture to be encoded.

According to an embodiment, the luminance of the HDR picture is divided by the modulation value before applying the non-linear function on the luminance of the HDR picture.

According to an embodiment, the non-linear function is either a gamma curve or a Slog curve.

According to an embodiment, the second factor is a ratio of the luminance component over the luminance of the HDR picture.

According to an embodiment, obtaining said two chrominance components from said at least one intermediate color component comprises:

- obtaining three intermediate components by taking the square-root of each intermediate color component; and
- linearly combining the three intermediate components.

According to another of its aspects, the present principles relates to a method of decoding a HDR picture from a scalable bitstream having a base layer and an enhancement layer. The method comprises:

- decoding a first SDR picture from the base layer of the scalable bitstream;
- decoding a second SDR picture by decoding the enhancement layer of the scalable bitstream and by using a predictor obtained from said decoded first SDR picture; and
- obtaining the HDR picture from said second SDR picture by increasing the dynamic of the second SDR picture.

According to the method, obtaining the HDR picture from said second SDR picture comprises:

- obtaining a second luminance component and two second chrominance components for the HDR picture by applying an inverse mapping on the colors obtained from a luminance component and two chrominance components obtained from the second SDR picture; and
- obtaining at least one color component of the HDR picture to be decoded from said second luminance component and said two second chrominance components.

According to an embodiment, obtaining a second luminance component and two second chrominance components comprises:

- obtaining the second luminance component by linearly combining the luminance component and the two chrominance components; and
- obtaining the two second chrominance components by scaling each of the two chrominance components by a first factor that depends on both a modulation value and the value of each pixel of the second luminance component.

According to an embodiment of the method, linearly combining the second luminance component and the two second chrominance components used coefficients (m, n) which are obtained from a bitstream.
According to an embodiment, the values of the second luminance component are higher than the corresponding values of the luminance component.
According to an embodiment, obtaining at least one color component of the HDR picture to be decoded from said second luminance component and said two second chrominance components comprises:

- obtaining a first component by applying a non-linear function to a second luminance component, obtained from the scalable bitstream, in order that the dynamic of said first component is increased compared to the dynamic of the second luminance component; and
- obtaining at least one color component from said first component, two chrominance components obtained from the scalable bitstream and from a second factor that depends on the second luminance component.

According to an embodiment, obtaining at least one color component comprises:

- obtaining three intermediate color components from said first component and the two second chrominance components; and
- obtaining said at least one color component by scaling each intermediate color component by the second factor.

According to an embodiment, obtaining at least one color component comprises:

- obtaining two intermediate chrominance components by scaling each second chrominance component according to the second factor; and
- obtaining said at least one color component from said first component and said two intermediate chrominance components.

According to an embodiment, obtaining at least one color component comprises:

- obtaining two intermediate chrominance components by scaling each second chrominance component by a value equals to the square root of the second factor; and
- obtaining said at least one color component by:
- obtaining a second component by combining the two intermediate chrominance components and the first component;
- obtaining at least one intermediate color component by linearly combining the intermediate chrominance component and said second component; and
- obtaining the three color components by taking the square of each intermediate color components.

According to an embodiment, the second luminance component is multiplied by the modulation value after having applied the non-linear function on the second luminance component.
According to an embodiment, the non-linear function is the inverse of either a gamma curve or a Slog curve.
According to an embodiment, the second factor is a ratio of the second luminance component to the first component.
According to other of its aspects, the disclosure relates to a device comprising a processor configured to implement the above method, a computer program product comprising program code instructions to execute the steps of the above method when this program is executed on a computer, a processor readable medium having stored therein instructions for causing a processor to perform at least the steps of the above method, and a non-transitory storage medium carrying instructions of program code for executing steps of the above method when said program is executed on a computing device.
The specific nature of the disclosure as well as other objects, advantages, features and uses of the disclosure will become evident from the following description of embodiments taken in conjunction with the accompanying drawings.

## 4. Brief Description of Drawings

In the drawings, an embodiment of the present principles is illustrated. It shows:

- **Fig. 1** illustrates the principles of a scalable video encoding scheme for encoding both a HDR picture and a SDR picture in a scalable bitstream in accordance with prior art;
- **Fig. 2** illustrates the principles of a scalable video decoding scheme for decoding a HDR picture and/or a SDR picture from a scalable bitstream in accordance with prior art;
- **Fig. 3** shows examples of chromaticity diagrams;
- **Fig. 4** shows schematically a diagram of the sub-steps of the step 1000 in accordance with an embodiment of the disclosure;
- **Fig. 5** illustrates the principle of a gamut mapping in accordance with the present principles;
- **Fig. 6** shows schematically a diagram of the sub-steps of the step 12 in accordance with an embodiment of the disclosure;

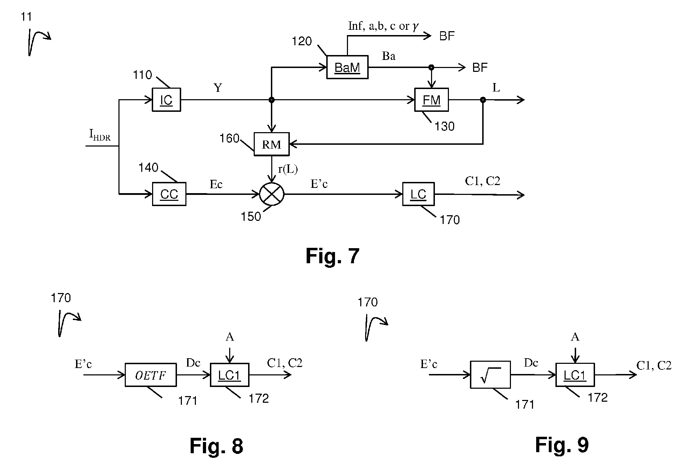

- **Fig. 7** shows schematically a diagram of the sub-steps of the step 11 in accordance with an embodiment of the disclosure;
- **Fig. 8** shows schematically a diagram of the sub-steps of the step 170 in accordance with an embodiment of the disclosure;
- **Fig. 9** shows schematically a diagram of the sub-steps of the step 170 in accordance with an embodiment of the disclosure;

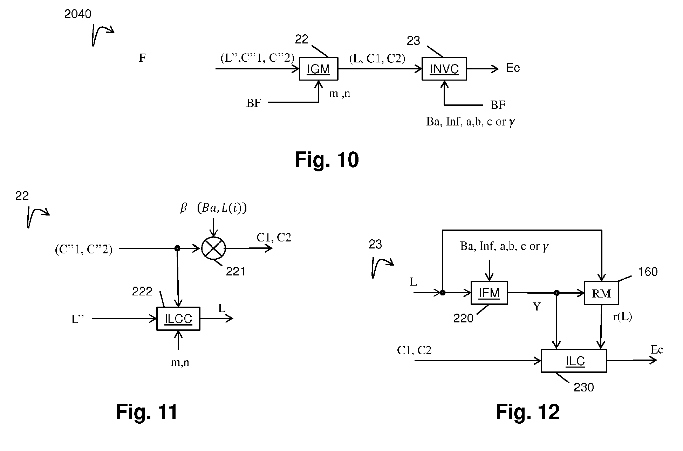

- **Fig. 10** shows schematically a diagram of the sub-steps of the step 2040 in accordance with an embodiment of the disclosure;
- **Fig. 11** shows schematically a diagram of the sub-steps of the step 22 in accordance with an embodiment of the disclosure;
- **Fig. 12** shows schematically a diagram of the sub-steps of the step 23 in accordance with an embodiment of the disclosure;

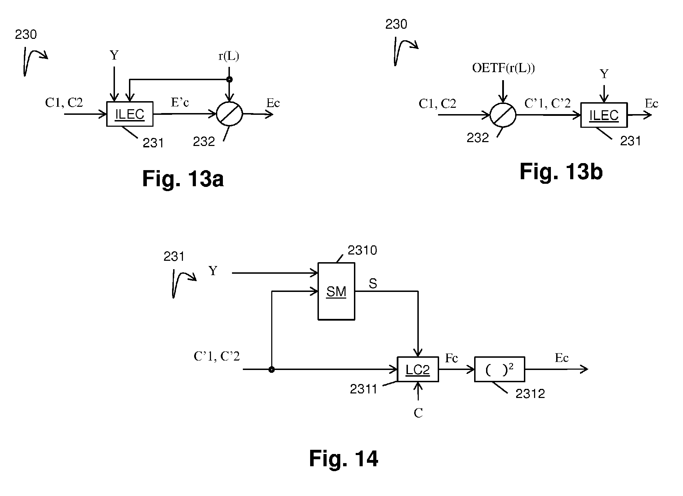

- **Fig. 13a** shows schematically a diagram of the sub-steps of the step 230 in accordance with an embodiment of the present principles, and **Fig. 13b** shows schematically a diagram of the sub-steps of the step 230 in accordance with another embodiment of the present principle;
- **Fig. 14** shows schematically a diagram of the sub-steps of the step 231 in accordance with an embodiment of the disclosure;

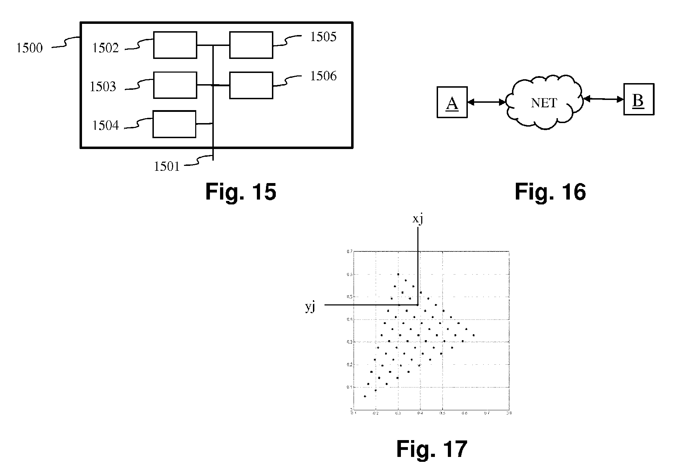

- **Fig. 15** shows an example of a architecture of a device in accordance with an embodiment of the disclosure;
- **Fig. 16** shows two remote devices communicating over a communication network in accordance with an embodiment of the disclosure; and
- **Fig. 17** illustrates an example of set of elements in the CEI 1931 diagram of a gamut.

Similar or same elements are referenced with the same reference numbers.

## 6. Description of Embodiments

The present principles will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

In an embodiment, a factor depends on a modulation value Ba. A modulation (or backlight) value is usually associated with an HDR picture and is representative of the brightness of the HDR picture. Here, the term (modulation) backlight is used by analogy with TV sets made of a color panel, like a LCD panel for instance, and a rear illumination apparatus, like a LED array for instance. The rear apparatus, usually generating white light, is used to illuminate the color panel to provide more brightness to the TV. As a consequence, the luminance of the TV is the product of the luminance of rear illuminator and of the luminance of the color panel. This rear illuminator is often called "modulation" or "backlight" and its intensity is somewhat representative of the brightness of the overall scene.

The disclosure is described for encoding/decoding a picture but extends to the encoding/decoding of a sequence of pictures (video) because each picture of the sequence is sequentially encoded/decoded as described below.

In the following, a HDR picture $I_{HDR}$ to be encoded is considered as having three color components Ec (c=1, 2 or 3) in which the pixel values of the HDR picture $I_{HDR}$ are represented.

The present principles is not limited to any color space in which the three components Ec are represented but applies to any color space such as RGB, CIELUV, XYZ, CIELab, etc.

**Fig. 4** shows schematically a diagram of the sub-steps of the step 1000 in accordance with an embodiment of the disclosure.

In step 11, a module C obtains a luminance component L and two chrominance components C1 and C2 from the HDR picture $I_{HDR}$ to be encoded. For instance the components (L, C1, C2) may belong to the YUV color space, obtained after applying an OETF on the HDR picture $I_{HDR}$, and the color components Ec may belong either to a linear RGB or XYZ color space.

In step 12, a module GM maps the luminance L and chrominance C1, C2 components onto a second luminance component L" and two second chrominance components C"1, C"2 in order that the gamut G2 of colors obtained from said second luminance L" and chrominance C"1, C"2 components maps onto the gamut G1 of the colors of the HDR picture $I_{HDR}$ to be encoded.

**Fig. 5** illustrates such a gamut mapping. In dashed line the gamut (R,G,B,W) of the colors obtained from the component L and the two chrominance components C1 and C2 is represented, and in solid line the gamut (R', G', B', W') of the colors of the picture I to be encoded is represented.

Mapping the gamut (R, G, B, W) onto the gamut (R', G', B', W') means mapping the primaries R, G, B to the primaries R', G', B' respectively and mapping the white point W to the white point W'. The purpose of the mapping is to transform (L, C1, C2) into (L", C"1, C"2) such that the perceived colors obtained from the L", C"1, C"2 components match the colors of the HDR picture better than (L, C1, C2) do.

The second SDR picture $I_{SDR2}$ is then formed by combining the second luminance component L" and the two second chrominance components C"1 and C"2.

According to an embodiment of the step 12, illustrated in **Fig. 6,** the two second chrominance components C"1, C"2 are obtained by scaling (step 121) each of the two chrominance components C1, C2 by a factor $\beta^{-1}(Ba,L(i))$ that depends on both a modulation value Ba, obtained from the luminance component L, and the value of each pixel i of the luminance component L. A module LCC (step 122) obtains the second luminance component L" by linearly combining the luminance component L and the two second chrominance components C"1, C"2:

$$\begin{cases} L'' = L - mC''_1 - nC''_2 \\ C''_1 = \beta^{-1}(Ba, L(i)) * C_1 \quad \text{(A)} \\ C''_2 = \beta^{-1}(Ba, L(i)) * C_2 \end{cases}$$

where m and n are coefficients (real values) that avoid color saturation by correcting the highest luminance peaks.

According to an embodiment, the coefficients **m** and **n** are stored in either a local or remote memory and/or added to a bitstream BF as illustrated in **Fig. 6.**

According to a variant of the module LCC (of equation A), the values of the second luminance component L" are lower than the corresponding values of the luminance component L:

$$L'' = L - \max(0, mC''_1 + nC''_2)$$

This ensures that the values of the second luminance component L" do not exceed the values of the luminance component L and thus ensures that no color saturation occurs.

According to an embodiment, the factor $\beta^{-1}(Ba,L(i))$ is obtained from a Look-Up-Table (LUT) for a specific modulation value Ba and a specific luminance value L(i). Thus, for multiple luminance peak values such as for example, 1000, 1500 and 4000 nits, a specific factor $\beta^{-1}(Ba,L(i))$ is stored in a LUT for each specific modulation value Ba.

According to a variant, the factor $\beta^{-1}(Ba,L(i))$ for a specific modulation value Ba is obtained for a value of a pixel of the luminance component L by interpolating the luminance peaks between the multiple luminance peaks for which LUT are stored.

According to an embodiment, the factor $\beta^{-1}(Ba,L(i))$ and the coefficients **m** and **n** in equation (A) are obtained as follows.

Mapping the gamut G2 of the colors obtained from the second luminance (L") and chrominance (C"1, C"2) components onto the gamut G1 of the colors of the HDR picture (obtained from the components L, C1 and C2) is given by:

$$\begin{bmatrix} L'' \\ C''_1 \\ C''_2 \end{bmatrix} = \Phi_{Ba}(Y) \begin{bmatrix} L \\ C_1 \\ C_2 \end{bmatrix} \quad \text{(B)}$$

where $\Phi_{Ba}(Y)$ is a mapping function depending on the linear luminance Y of the HDR picture $I_{HDR}$. Typically, the linear luminance Y is obtained as a linear combination of the components Ec of the HDR picture $I_{HDR}$. The luminance component L is related unambiguously to the linear luminance Y and the backlight value Ba, such that one may write

$$\Phi_{Ba}(Y) = \Phi_{Ba}(f(Ba, Y)) = \Phi_{Ba}(L)$$

and the mapping function is seen as a function of the luminance component L.

Now, let us fix a modulation value Ba and a specific linear luminance level $Y_0$. Let us suppose that the color components Ec are expressed in the linear RGB color space. The associated three primaries $R_{Y_0}$, $G_{Y_0}$, $B_{Y_0}$ of the gamut G2 are given by

$$R_{Y_0} = \begin{bmatrix} Y_0/A_{11} \\ 0 \\ 0 \end{bmatrix}, \quad G_{Y_0} = \begin{bmatrix} 0 \\ Y_0/A_{12} \\ 0 \end{bmatrix}, \quad R_{Y_0} = \begin{bmatrix} 0 \\ 0 \\ Y_0/A_{13} \end{bmatrix} \quad \text{(C)}$$

where A1 is the one-row matrix that defines the linear luminance Y from the linear RGB, i.e.

$$Y = A_1 \begin{bmatrix} E_1 \\ E_2 \\ E_3 \end{bmatrix}.$$

Let S denote a 3x3 matrix made of the images $\mu(.)$, corresponding to the application of the module C (step 11), to these three primaries:

$$S_{Y_0} = \left[\mu(R_{Y_0}) \quad \mu(G_{Y_0}) \quad \mu(B_{Y_0})\right].$$

The purpose of the mapping function $\Phi_{Ba}(L)$ is to map back $S_{Y_0}$ onto the three primaries of the gamut G2. In other words, the matrix $S_{Y_0}$ should be under the form:

$$A\begin{bmatrix} r & 0 & 0 \\ 0 & g & 0 \\ 0 & 0 & b \end{bmatrix}$$

where r,g,b are unknown parameters and A is the 3x3 matrix that transforms the non-linear color space R'G'B' into the color space of LC1C2. All put together, one gets:

$$\Phi_{Ba}(L)S_{Y_0} = A\begin{bmatrix} r & 0 & 0 \\ 0 & g & 0 \\ 0 & 0 & b \end{bmatrix} = AD$$

Also, the preservation of the white point, whose coordinates are [1 0 0] in the color space of LC1C2, leads to another condition:

$$\begin{bmatrix} \eta \\ 0 \\ 0 \end{bmatrix} = \Phi_{Ba}(L)\begin{bmatrix} 1 \\ 0 \\ 0 \end{bmatrix} = AD S_{Y_0}{}^{-1}\begin{bmatrix} 1 \\ 0 \\ 0 \end{bmatrix}$$

were $\eta$ is another unknown parameter. As a consequence, the matrix D is uniquely determined by:

$$diag(D) = \eta A^{-1}\begin{bmatrix} 1 \\ 0 \\ 0 \end{bmatrix} / S_{Y_0}{}^{-1}\begin{bmatrix} 1 \\ 0 \\ 0 \end{bmatrix} \qquad \text{(D)}$$

where the division is understood as the coefficient division of the first column of $A^{-1}$ by the first column of $S_{Y_0}{}^{-1}$. As a consequence, the mapping matrix is determined up to a scaling factor $\eta$.

The inverse of the mapping function $\Phi_{Ba}(L)$, required at the decoding side, is not easily obtained because it requires solving an implicit non-linear problem in L, because one gets easily the inverse matrix $\Phi_{Ba}{}^{-1}(L)$ as a function of the luminance component L, but not its counter part $\Phi_{Ba}{}^{-1}(L'')$ as a function of second luminance component L". We show that the formulation of $\Phi_{Ba}(L)$ can be further simplified in order to obtain a simple inverse $\Phi_{Ba}{}^{-1}(L'')$.

Actually, the mapping function may be expressed by:

$$\Phi_{Ba}(L) = \begin{bmatrix} \eta & -m\beta^{-1}(Ba, L(i)) & -n\beta^{-1}(Ba, L(i)) \\ 0 & \beta^{-1}(Ba, L(i)) & 0 \\ 0 & 0 & \beta^{-1}(Ba, L(i)) \end{bmatrix} \qquad \text{(E)}$$

where m and n are coefficients (real values) that depend on the luminance level $Y_0$. The inverse $\Phi_{Ba}^{-1}(L)$ of the mapping function $\Phi_{Ba}(L)$ is given by:

$$\Phi_{Ba}^{-1}(L) = SD^{-1}A^{-1} \quad \text{(F)}$$

with its first column given by

$$\Phi_{Ba}^{-1}(L)_{col1} = \eta^{-1}\begin{bmatrix}1\\0\\0\end{bmatrix}$$

Following some algebraic manipulations, one shows that equation (F) becomes

$$\Phi_{Ba}^{-1}(L) = \eta^{-1}\begin{bmatrix}1 & m & n\\0 & \beta & 0\\0 & 0 & \beta\end{bmatrix},$$

leading to the mapping function

$$\Phi_{Ba}(L) = \Phi_0\begin{bmatrix}\eta & 0 & 0\\0 & \eta\beta^{-1} & 0\\0 & 0 & \eta\beta^{-1}\end{bmatrix} \quad (G)$$

where m and n are real values (coefficients) that do not depend on the modulation value Ba and the luminance component L, $\beta = \beta(Ba,L(i))$ and one has defined the fixed matrix

$$\Phi_0 = \begin{bmatrix}1 & m & n\\0 & 1 & 0\\0 & 0 & 1\end{bmatrix}$$

Equations (B) and (G) show that the mapping function has two effects: first, the dynamic of the luminance component L is scaled by a scaling factor $\eta$ and, second, the chrominance components C1 and C2 are also scaled by a scaling factor $\eta\beta^{-1}$.

In order to preserve the global luminance mapping between L and L", the parameter $\eta$ is set to one. Equation (G) becomes:

$$\Phi_{Ba}(L) = \Phi_0\begin{bmatrix}1 & 0 & 0\\0 & \beta^{-1}(Ba, L(i)) & 0\\0 & 0 & \beta^{-1}(Ba, L(i))\end{bmatrix}(H)$$

where $\beta$ does depend on the modulation value Ba and the luminance component. This formula is inverted to get the inverse mapping function

$$\Phi_{Ba}^{-1}(L'') = \begin{bmatrix}1 & 0 & 0\\0 & \beta(Ba, L''(i)) & 0\\0 & 0 & \beta(Ba, L''(i))\end{bmatrix}\Phi_0^{-1} \quad (I)$$

Here, the luminance component L is obtained back from L", C"1, C"2 by applying the matrix $\Phi_0^{-1}$ and then, since L is known, one finds the factor $\beta(Ba, L''(i))$ to apply to the second chrominance components C"1, C"2 to get the chrominance components C1, C2 back.

The mapping function $\Phi_{Ba}(L)$ is then provided by equation (H) where the constant matrix $\Phi_0$ is used for all luminance level up to the luminance peak P of the HDR picture $I_{HDR}$, and $\beta$ is defined on the full range of luminance up to the luminance peak P.

Including equation (H) in equation (B) leads to equation (A).

According to another embodiment, the factor $\beta$-1 (Ba, L(i), m, n) is considered as depending also on the coefficients **m** and **n** which are given as explained in the previous embodiment.

The factor $\beta^1$ is thus the single unknown value in step 12.

The factor $\beta^1$ is obtained such that a gamut distortion calculated between the gamuts G1 and G2 is minimized. In other words, the factor $\beta^1$ is the optimal factor under the condition of gamut preservation.

Mathematically speaking, the factor $\beta^1$ is obtained by:

$$\beta^{-1}(Ba_0, L_0, m, n) = argmin_{\beta_{test}^{-1}} \; GD(\beta_{test}^{-1}),$$

where $Y_0$ is a given luminance value from which is deduced a luminance value $L_0$, $Ba_0$ is a given modulation value given and the gamut distortion $GD(\beta_{test}^{-1})$ is given by:

$$GD(\beta_{test}^{-1}) = \sum_j \left(x_j - x'_j\right)^2 + \left(y_j - y'_j\right)^2$$

in which the gamut distortion is defined by the sum of the square error between an element (xj,yj) of the gamut G1 and an associated element (x'j,y'j) of the gamut G2.

Let us fix a luminance value Y0. One obtains the corresponding XYZ values of each element of the set by

$$X_j = Y_0 x_j / y_j, \quad Y_j = Y_0 \quad \text{and} \quad Z_j = Y_0 (1 - x_j - y_j)/y_j.$$

and then the corresponding color values Ecj (c=1,2, or 3). Let us fix and impose a modulation value Ba0 and a test factor $\beta test^{-1}$ used for $\beta$-$^1(Ba_0, L_0, m, n)$ at step 121.

One obtains the second values L"j, C"1j and C"2j by applying the coding chain, made of steps 11 and 12 to the color components. From these second values, one deduces the associated gamut set of associated element (x'j,y'j) in the CEI 1931 diagram.

**Fig. 17** illustrates an example of set of elements (xj,yj) in the CEI 1931 diagram of a gamut. Note the XYZ coordinates of each element (xj,yj) are given by

$$X_j = Y_0 x_j / y_j, \quad Y_j = Y_0 \quad \text{and} \quad Z_j = Y_0 (1 - x_j - y_j)/y_j.$$

By making the modulation value $Ba_0$ and the luminance component $L_0$ vary, and minimizing the associated gamut distortion GD(.), one gets all the factors $\beta^{-1}(Ba_0, L_0, m, n)$ depending on the modulation value $Ba_0$, the luminance component $L_0$ and for fixed coefficients **m** and **n.**

According to an embodiment of the step 11, illustrated in **Fig. 7,** in step 110, a module IC obtains a component Y that represents the luminance of the HDR picture $I_{HDR}$ by linearly combining the three components Ec:

$$Y = A_1 \begin{bmatrix} E_1 \\ E_2 \\ E_3 \end{bmatrix}$$

where A1 is the first row of a 3x3 matrix A that defines a color space transforms from the (E1, E2, E3) color space to a color space (Y, C1, C2).

In step 130, a module FM obtains the luminance component L by applying a non-linear function **f** on the component Y:

$$L = f(Ba, Y) \qquad (1)$$

where Ba is a modulation value obtained from the component Y by the module BaM (step 120).

Applying the non-linear function **f** on the component Y reduces its dynamic range. In other terms, the dynamic of the luminance component L is reduced compared to the dynamic of the component Y.

Basically the dynamic range of the component Y is reduced in order that the luminance values of the component L are represented by using 10 bits.

According to an embodiment, the component Y is divided by the modulation value Ba before applying the non-linear function **f:**

$$L = f(Y/Ba) \qquad (2)$$

According to an embodiment, the non-linear function **f** is a gamma function:

$$L = B.Y_1^{\gamma}$$

where $Y_1$ equals either Y or Y/Ba according to the embodiments of eq. (1) or (2), B is a constant value, $\gamma$ is a parameter (real value strictly below 1).

According to an embodiment, the non-linear function **f** is a S-Log function:

$$L = a.\ln\left(Y_1 + b\right) + c$$

where **a, b** and **c** are parameters (real values) of a SLog curve determined such that f(0) and f(1) are invariant, and the derivative of the SLog curve is continuous in 1 when prolonged by a gamma curve below 1. Thus, **a, b** and **c** are functions of the parameter $\gamma$.

Typical values are shown in Table 1.

**Table 1**

| Y | a | B | c |
|---|---|---|---|
| 1/2.0 | 0.6275 | 0.2550 | 0.8575 |
| 1/2.4 | 0.4742 | 0.1382 | 0.9386 |
| 1/2.8 | 0.3861 | 0.0811 | 0.9699 |

In an advantageous embodiment, a value of $\gamma$ close to 1/2.5 is efficient in terms of HDR compression performance as well as good viewability of the obtained SDR luma. Thus, the 3 parameters may advantageously take the following values: a = 0.44955114, b = 0.12123691, c = 0.94855684.

According to an embodiment, the non-linear function **f** is either a gamma correction or a SLog correction according to the pixel values of the component Y.

Applying a gamma correction on the component Y, pulls up the dark regions but does not lower enough high lights to avoid burning of bright pixels.

Then, according to an embodiment, the module FM applies either the gamma correction or the SLog correction according to the pixel values of the component Y. An information data **Inf** may indicate whether either the gamma correction or Slog correction applies.

For example, when the pixel value of the component Y is below a threshold (equal to 1), then the gamma correction is applied and otherwise the SLog correction is applied.

According to an embodiment of the step 120, the modulation value Ba is an average, median, min or max value of the pixel values of the component Y. These operations may be performed in the linear HDR luminance domain $Y_{lin}$ or in a non-linear domain like ln(Y) or $Y^{\gamma}$ with y<1.

According to an embodiment, when the method is used to encode several HDR pictures belonging to a sequence of pictures, a modulation value Ba is determined for each HDR picture, a Group of Pictures (GOP) or for a part of a HDR picture such as, but not limited to, a slice or a Transfer (Transform) Unit as defined in HEVC.

According to an embodiment, the value Ba and/or the parameters of the non-linear function **f** (such as **a, b, c** or y) and/or the information data **Inf** is (are) stored in a local or remote memory and/or added into a bitstream BF as illustrated in **Figs. 4** and **7.**

In step 140, a module CC obtains at least one color component EC (c=1, 2, 3) from the HDR picture $I_{HDR}$. A color component Ec may be obtained directly from a local or a remote memory or by applying a color transform on the HDR picture $I_{HDR}$.

In step 150, an intermediate color component E'c (c=1, 2 or 3) is obtained by scaling each color component Ec by a factor r(L) that depends on the luminance component L:

$$\begin{cases} E'_1(i) = E_1(i) * r(L(i)) \\ E'_2(i) = E_2(i) * r(L(i)) \\ E'_3(i) = E_3(i) * r(L(i)) \end{cases}$$

where r(L(i)) is a factor (real value), determined by the module RM (step 160), that depends on the value of a pixel i of the component L, $E'_c(i)$ is the value of the pixel i of the intermediate color component E'c, and $E_c$ (i) is the value of the pixel i of the color component Ec.

Scaling by a factor can be performed by different methods, for example, by multiplying by said factor or dividing by the inverse of said factor.

Scaling each color component Ec by the factor r(L) that depends on the luminance component L preserves the hue of the colors of the HDR picture I$_{HDR}$.

According to an embodiment of the step 160, the factor r(L) is the ratio of the luminance component L over the component Y:

$$r(L(i)) = \frac{L(i)}{Y(i)}$$

with Y(i) being the value of a pixel i of the component Y. Actually, the value Y(i) of a pixel of the component Y depends un-ambiguously on the value L(i) of a pixel of the luminance component L, such that the ratio can be written as a function of L(i) only.

This embodiment is advantageous because scaling each color component Ec by the factor r(L) that further depends on the component Y preserves the hue of the colors of the HDR picture I and thus improves the visual quality of the decoded HDR picture.

More precisely, in colorimetry and color theory, colorfulness, chroma, and saturation refer to the perceived intensity of a specific color. Colorfulness is the degree of difference between a color and gray. Chroma is the colorfulness relative to the brightness of another color that appears white under similar viewing conditions. Saturation is the colorfulness of a color relative to its own brightness.

A highly colorful stimulus is vivid and intense, while a less colorful stimulus appears more muted, closer to gray. With no colorfulness at all, a color is a "neutral" gray (a picture with no colorfulness in any of its colors is called grayscale). Any color can be described from its colorfulness (or chroma or saturation), lightness (or brightness), and hue.

The definition of the hue and saturation of the color depends on the color space used to represent said color.

For example, when a CIELUV color space is used, the saturation $s_{uv}$ is defined as the ratio between the chroma $C^*_{uv}$ over the luminance $L^*$.

$$s_{uv} = \frac{C^*_{uv}}{L^*} = \frac{\sqrt{u^{*2} + v^{*2}}}{L^*}$$

The hue is then given by

$$h_{uv} = arctan\frac{v^*}{u^*}$$

According to another example, when a CIELAB color space is used, the saturation is defined as the ratio of the chroma over the luminance:

$$s_{ab} = \frac{C^*_{ab}}{L^*} = \frac{\sqrt{a^{*2} + b^{*2}}}{L^*}$$

The hue is then given by

$$h_{ab} = arctan\frac{b^*}{a^*}$$

These equations are a reasonable predictor of saturation and hue that are in agreement with the human perception of saturation, and demonstrate that adjusting the brightness in CIELAB (or CIELUV) color space while holding the angle $a^*/b^*$ (or $u^*/v^*$) fixed does affect the hue and thus the perception of a same color. In step 150, scaling the color components Ec by a same factor preserves this angle, thus the hue.

Now let us consider that the HDR picture $I_{HDR}$ is represented in the CIELUV color space and a picture I2 that is formed by combining the luminance component L, whose dynamic range is reduced compared to the dynamic range of the luminance of the HDR picture $I_{HDR}$ (step 130), and two chrominance components U (=C1) and V (=C2) of the CIELUV color space. The colors of the picture I2 are thus differently perceived by a human being because the saturation and the hue of the colors changed. The method (step 150) determines the chrominance components C1 and C2 of the picture I2 in order that the hue of the colors of the picture I2 best match the hue of the colors of the HDR picture $I_{HDR}$.

According to an embodiment of the step 160, the factor r(L) is given by:

$$r(L(i)) = \frac{max\{5, L(i)\}}{2048max\{0.01, Y(i)\}}$$

This last embodiment is advantageous because it prevents the factor from going to zero for very dark pixels, i.e. allows the ratio to be invertible regardless of the pixel value.

In step 170, the two chrominance components C1, C2 are obtained from said at least one intermediate color components E'c.

According to an embodiment of the step 170, illustrated in **Fig. 8,** at least one intermediate component Dc (c=1, 2 or 3) is obtained by applying (step 171) an OETF on each intermediate color component (E'c):

$$\begin{cases} D_1 = \text{OETF} \ (E_1') \\ D_2 = \text{OETF} \ (E_2') \\ D_3 = \text{OETF} \ (E_3') \end{cases}$$

For example, the OETF is defined by the ITU-R recommendation BT.709 or BT.2020 and stated as follows

$$D_c = \text{OETF} \ (E_c') = \begin{cases} 4.5E_c' & E_c' < 0.018 \\ 1.099E_c'^{0.45} - 0.099 & E_c' \geq 0.018 \end{cases}.$$

This embodiment allows a reduction of the dynamic range according to a specific OETF but leads to a complex decoding process as detailed later.

According to a variant of this embodiment, illustrated in **Fig. 9,** the OETF is approximated by a square root, i.e. at least one intermediate component Dc (c=1, 2 or 3) is obtained by taking the square-root (step 171) of each intermediate color component (E'c):

$$\begin{cases} D_1 = \sqrt{E_1'} \\ D_2 = \sqrt{E_2'} \\ D_3 = \sqrt{E_3'} \end{cases}$$

This embodiment is advantageous because it provides a good approximation of the OETF defined by the ITU-R recommendation BT.709 or BT.2020 and leads to a low complexity decoder.

According to another variant of this embodiment, the OETF is approximated by a cubic-root, i.e. at least one intermediate component Dc (c=1, 2 or 3) is obtained by taking the cubic-root (step 171) of each intermediate color component (E'c):

$$\begin{cases} D_1 = \sqrt[3]{E_1'} \\ D_2 = \sqrt[3]{E_2'} \\ D_3 = \sqrt[3]{E_3'} \end{cases},$$

This embodiment is advantageous because it provides a good approximation of the OETF defined by the ITU-R recommendation BT.709 or BT.2020 but it leads to a somewhat more complex decoder than the decoder obtains when the OETF is approximated by a square-root.

In step 172, a module LC1 obtains the two chrominance components C1 and C2 by linearly combining the three intermediate components Dc:

$$\begin{bmatrix} C_1 \\ C_2 \end{bmatrix} = \begin{bmatrix} A_2 \\ A_3 \end{bmatrix} \begin{bmatrix} D_1 \\ D_2 \\ D_3 \end{bmatrix}$$

where A2 and A3 are the second and third rows of the 3x3 matrix A.

**Fig. 10** shows schematically a diagram of the sub-steps of the step 2040 in accordance with an embodiment of the disclosure.

A luminance component L" and two chrominance components C"1, C"2 are obtained from the second SDR picture $I_{SDR2}$. Note that as explained above, the second SDR picture $I_{SDR2}$ is formed by combining the second luminance component L" and the two second chrominance components C"1 and C"2 and thus those components are directly obtained from the second SDR picture $I_{SDR2}$.

In step 22, a module IGM obtains a second luminance component L and two second chrominance components C1, C2 from said luminance L" and chrominance C"1, C"2 components by applying an inverse mapping on the colors obtained from said luminance L" and chrominance C"1, C"2 components.

In step 23, a module INVC obtains at least one color component Ec of the HDR picture to be decoded from said second luminance L component and said two second chrominance C1, C2 components. The decoded HDR picture is then obtained by combining said at least one color component Ec.

According to an embodiment of the step 22, illustrated in **Fig. 11,** a module ILCC obtains (step 222) the second luminance component L by linearly combining the luminance component L" and the two chrominance components C"1, C"2. The two second chrominance components C1, C2 are obtained by scaling (step 221) each of the two chrominance components C"1, C"2 by a factor $\beta$ (Ba, L(i)) that depends on both a modulation value Ba and the value of each pixel i of the second luminance component L, and:

$$\begin{cases} L\ \ = L'' + mC''_1 + nC''_2 \\ C_1\ = \beta(Ba, L(i)) * C''_1 \qquad \text{(J)} \\ C_2\ = \beta(Ba, L(i)) * C''_2 \end{cases}$$

where m and n are coefficient (real values). The coefficients m and n may be those obtained by the factorization of the matrix $\Phi_{Ba}$ (L) in equation (G), i.e. m and n are those obtained in $\Phi_0$. Consequently, they depend on the gamut of the HDR picture I (for instance BT.709 or BT.2020 gamut). Typical values for m and n are m≈n in the interval [0.1,0.5]

Equation (J) is considered as being an inverse mapping applies on the colors obtained from the luminance L" and chrominance C"1, C"2 components. Equation (J) is directly obtained from equation (A) that is considered as being a color mapping.

According to a variant of the module ILCC, the values of the second luminance component L are higher than the corresponding values of the luminance component L":

$$L\ \ = L'' + \max(0, mC'_1 + nC'_2)$$

This embodiment is advantageous because it ensures that the second luminance component L does not exceed a potential clipping value that is usually used by the decoder to define a luminance peak. When a luminance peak is required by a decoder and when the second luminance component L is given by equation (J), the second luminance component L is clipped introducing some artefacts.

According to an embodiment, the modulation value Ba and/or the coefficients **m** and **n** are obtained from a remote or local memory such a Look-Up-Table, or from a bitstream BF as illustrated in **Fig. 11.**

According to an embodiment, the factor $\beta$-1(*Ba,L(i)*) is obtained from a Look-Up-Table (LUT) for a specific modulation value Ba and a specific value L(i) of the second luminance component L. Thus, for multiple luminance peak values such as for example, 1000, 1500 and 4000 nits, a specific factor $\beta$-1(*Ba,L(i)*) is stored in a LUT for each specific modulation value Ba.

According to a variant, the factor $\beta$-1(*Ba, L(i)*) for a specific modulation value Ba is obtained for a value of a pixel of the second luminance component L by interpolating the luminance peaks between the multiple luminance peaks for which LUT are stored.

According to an embodiment of the step 23, illustrated in **Fig. 12,** in step 220, a module IFM obtains a first component Y by applying a non-linear function **f⁻¹** on the second luminance component L in order that the dynamic of the first component Y is increased compared to the dynamic of the second luminance component L:

$$Y = f^{-1}(\mathrm{Ba, L}) \qquad (A3)$$

The non-linear function **f⁻¹** is the inverse of the non-linear function **f** (step 130).

Thus, the embodiments of the function **f⁻¹** are defined according to the embodiments of the function **f.**

According to an embodiment, the parameters of the non-linear function **f⁻¹** (such as **a, b, c** or y) and/or the information data **Inf** is (are) obtained from a local or remote memory (for example a Look-Up-Table) and/or from a bitstream BF as illustrated in **Fig. 10.**

According to an embodiment, the luminance component L is multiplied by the modulation value Ba after having applied the non-linear function **f⁻¹:**

$$Y = \mathrm{Ba} * f^{-1}(\mathrm{L}) \qquad (A4)$$

According to an embodiment, the non-linear function **f⁻¹** is the inverse of a gamma function.

The component Y is then given by:

$$Y_1 = \frac{L^{1/\gamma}}{B}$$

where $Y_1$ equals Y or Y/Ba according to the embodiments of eq. (A3) or (A4), B is a constant value, $\gamma$ is a parameter (real value strictly below 1).

According to an embodiment, the non-linear function **f⁻¹** is the inverse of a S-Log function. The component $Y_1$ is then given by:

$$Y_1 = exp^{\left(\frac{L-c}{a}\right)} - b$$

According to an embodiment, the non-linear function **f** is the inverse of either a gamma correction or a SLog correction according to the pixel values of the component Y. This is indicated by the information data **Inf.**

In step 230, a module ILC obtains at least one color component Ec from the first component Y, the two second chrominance components C1, C2, and from a factor r(L) that depends on the second luminance component L. The decoded HDR picture is then obtained by combining said at least one color component Ec.

When a general OETF is applied on each intermediate color component E'c (step 171 in **Fig. 8**), the intermediate components Dc are related to the component Y, the two second chrominance components C1, C2 and the factor r(L):

$$Y = A_1 \begin{bmatrix} E_1 \\ E_2 \\ E_3 \end{bmatrix} = A_1 \begin{bmatrix} E'_1 \\ E'_2 \\ E'_3 \end{bmatrix} / r(L) = A_1 \begin{bmatrix} \mathrm{EOTF}(D_1) \\ \mathrm{EOTF}(D_2) \\ \mathrm{EOTF}(D_3) \end{bmatrix} / r(L) \quad (A5a)$$

and

$$\begin{bmatrix} C_1 \\ C_2 \end{bmatrix} = \begin{bmatrix} A_2 \\ A_3 \end{bmatrix} \begin{bmatrix} D_1 \\ D_2 \\ D_3 \end{bmatrix} \quad (A5b)$$

where EOTF (Electro-Optical Trans Function) is the inverse of OETF applied in step 171.

Equation (A5b) provides

$$\begin{cases} D_2 = \vartheta_2 D_1 + L_2(C_1, C_2) \\ D_3 = \vartheta_3 D_1 + L_3(C_1, C_2) \end{cases} \quad (A6)$$

where $\mathrm{OETF}(E_c) = D_c$, $\vartheta_i$ are constants depending on the matrix A and $L_i$ are linear functions also depending on the matrix A. Then, equation (A5a) becomes:

$$r(L) * Y = A_{11} \mathrm{EOTF}(D_1) + A_{12} \mathrm{EOTF}(D_2) + A_{13} \mathrm{EOTF}(D_3) \quad (A7)$$

and then

$$r(L) * Y = A_{11} \mathrm{EOTF}(D_1) + A_{12} \mathrm{EOTF}(\vartheta_2 D_1 + L_2(C_1, C_2)) + A_{13} \mathrm{EOTF}(\vartheta_3 D_1 + L_3(C_1, C_2)) \quad (A8)$$

Equation (A8) is an implicit equation on $D_1$ only. Depending on the expression of the EOTF, equation (A8) can be more or less solved simply. Once solved, $D_1$ is obtained, $D_2$, $D_3$ are deduced from $D_1$ by equation (A6). Then the intermediate color component E'c are obtained by applying the EOTF on the three obtained intermediate components Dc, i.e. E'c = EOTF(Dc).

In this general case, i.e. when a general OETF (does not have any specific property) is applied on each intermediate color component E'c, there exist no analytic solution to equation (8). For instance when the OETF is the ITU-R BT.709/2020 OETF, and the equation (A8) may be solved numerically by using the so-called Newton's method or any other numerical method to find the root of a regular function. However, this leads to highly complex decoders.

In this general case, according to a first embodiment of the step 230, illustrated in **Fig. 13a**, in step 231, a module ILEC obtains three intermediate color component E'c from the first component Y, the two second chrominance components C1, C2 and the factor r(L) as above explained. In step 232, the three color components Ec are obtained by scaling each intermediate color component E'c by the factor r(L):

$$Ec(i) = E'c(i)/r(L(i))$$

where r(L(i)) is the factor given by step 160 that depends on the value of a pixel i of the second luminance component L, $E'_c(i)$ is the value of the pixel i of an intermediate color component E'c, and $E_c(i)$ is the value of the pixel i of the color component Ec.

Actually this order, step 231 before step 232, is the inverse of the order, step 150 followed by step 170, of the encoding method.

According to a variant of this first embodiment, the OEFT is a square root function and the EOTF is then a square function.

According to another variant of this first embodiment, the OEFT is a cubic root function and the EOTF is then a cubic function.

When the OETF used in step 171, fulfills the commutation condition, namely

$$OETF(x*y) = OETF(x) * OETF(y),$$

the component Y and the color components Ec are related by:

$$Y = A_1 \begin{bmatrix} E_1 \\ E_2 \\ E_3 \end{bmatrix} = A_1 \begin{bmatrix} \mathrm{EOTF}(F_1) \\ \mathrm{EOTF}(F_2) \\ \mathrm{EOTF}(F_3) \end{bmatrix} \quad (A9)$$

where Fc are components equal to OETF(Ec) and

$$\begin{bmatrix} C'_1 \\ C'_2 \end{bmatrix} = \begin{bmatrix} C_1 \\ C_2 \end{bmatrix} / \mathrm{OETF}(r(L)) = \begin{bmatrix} A_2 \\ A_3 \end{bmatrix} \begin{bmatrix} D_1 \\ D_2 \\ D_3 \end{bmatrix} / \mathrm{OETF}(r(L))$$

$$= \begin{bmatrix} A_2 \\ A_3 \end{bmatrix} \begin{bmatrix} \mathrm{OETF}(E'_1) \\ \mathrm{OETF}(E'_2) \\ \mathrm{OETF}(E'_3) \end{bmatrix} / \mathrm{OETF}(r(L)),$$

such that the commutation condition provides

$$\begin{bmatrix} C'_1 \\ C'_2 \end{bmatrix} = \begin{bmatrix} A_2 \\ A_3 \end{bmatrix} \begin{bmatrix} \mathrm{OETF}(E'_1/r(L)) \\ \mathrm{OETF}(E'_2/r(L)) \\ \mathrm{OETF}(E'_3/r(L)) \end{bmatrix} = \begin{bmatrix} A_2 \\ A_3 \end{bmatrix} \begin{bmatrix} \mathrm{OETF}(E_1) \\ \mathrm{OETF}(E_2) \\ \mathrm{OETF}(E_3) \end{bmatrix} = \begin{bmatrix} A_2 \\ A_3 \end{bmatrix} \begin{bmatrix} F_1 \\ F_2 \\ F_3 \end{bmatrix} (A10)$$

Equation (10) provides

$$\begin{cases} F_2 = \vartheta_2 F_1 + L_2(C'_1, C'_2) \\ F_3 = \vartheta_3 F_1 + L_3(C'_1, C'_2) \end{cases}$$

where $\vartheta_i$ are constants depending on the matrix A and $L_i$ are linear functions also depending on the matrix A.

Then, equation (A9) becomes:

$$Y = A_{11} \mathrm{EOTF}(F_1) + A_{12} \mathrm{EOTF}(F_2) + A_{13} \mathrm{EOTF}(F_3) \quad (A11)$$

and then

$$Y = A_{11} \mathrm{EOTF}(F_1) + A_{12} \mathrm{EOTF}\left(\vartheta_2 F_1 + L_2(C'_1, C'_2)\right) +$$

$$A_{13} \mathrm{EOTF}\left(\vartheta_3 F_1 + L_3(C'_1, C'_2)\right) \quad (A12)$$

When the OETF fulfills the commutation conditions, according to a second embodiment of the step 230, illustrated in **Fig. 13b,** in step 232, two intermediate components C'1 and C'2 are obtained by scaling the two second chrominance components C1 and C2 by the factor OEFT(r(L(i))) where OETF is the function used in step 171 in **Fig. 8:**

$$C'1(i) = \frac{C1(i)}{OETF(r(L(i)))}$$

$$C'2(i) = \frac{C2(i)}{OETF(r(L(i)))}$$

where r(L(i)) is the factor given by step 160 that depends on the value of a pixel i of the second luminance component L, $C'_1(i), C'_2(i)$ is respectively the value of the pixel i of the component C'1 and C'2, $C_1$ *(i), * $C_2$ *(i)* is respectively the value of the pixel i of the two second chrominance components C1 and C2.

In step 231, a module ILEC obtains the three color components Ec from the first component Y and the two intermediate chrominance components C'1, C'2 as above explained.

According to a variant of this second embodiment, the OEFT is a square root function and the EOTF is then a square function. Then, in step 232 in **Fig. 13b,** the two intermediate components C'1 and C'2 are obtained by scaling the two second chrominance components C1 and C2 by the factor $\sqrt{r(L(i))}$

$$C'1(i) = \frac{C1(i)}{OETF(r(L(i)))} = \frac{C1(i)}{\sqrt{r(L(i))}}$$

$$C'2(i) = \frac{C2(i)}{OETF(r(L(i)))} = \frac{C2(i)}{\sqrt{r(L(i))}}$$

Equation(9) becomes:

$$Y = A_1 \begin{bmatrix} E_1 \\ E_2 \\ E_3 \end{bmatrix} = A_1 \begin{bmatrix} F_1^2 \\ F_2^2 \\ F_3^2 \end{bmatrix} \qquad (A11)$$

and

$$\begin{bmatrix} C'_1 \\ C'_2 \end{bmatrix} = \begin{bmatrix} C_1 \\ C_2 \end{bmatrix} / \sqrt{r(L)} = \begin{bmatrix} A_2 \\ A_3 \end{bmatrix} \begin{bmatrix} D_1 \\ D_2 \\ D_3 \end{bmatrix} / \sqrt{r(L)} = \begin{bmatrix} A_2 \\ A_3 \end{bmatrix} \begin{bmatrix} \sqrt{E'_1} \\ \sqrt{E'_2} \\ \sqrt{E'_3} \end{bmatrix} / \sqrt{r(L)}$$

such that the commutation provides

$$\begin{bmatrix} C'_1 \\ C'_2 \end{bmatrix} = \begin{bmatrix} A_2 \\ A_3 \end{bmatrix} \begin{bmatrix} \sqrt{E'_1/r(L)} \\ \sqrt{E'_2/r(L)} \\ \sqrt{E'_2/r(L)} \end{bmatrix} = \begin{bmatrix} A_2 \\ A_3 \end{bmatrix} \begin{bmatrix} \sqrt{E_1} \\ \sqrt{E_2} \\ \sqrt{E_3} \end{bmatrix} = \begin{bmatrix} A_2 \\ A_3 \end{bmatrix} \begin{bmatrix} F_1 \\ F_2 \\ F_3 \end{bmatrix} \qquad (A12)$$

Equation (11) becomes:

$$Y = A_{11}F_1^2 + A_{12}F_2^2 + A_{13}F_3^2 \qquad \text{(A13)}$$

and

$$Y = A_{11}F_1^2 + A_{12}\left(\vartheta_2 F_1 + L_2(C'_1, C'_2)\right)^2 + A_{13}\left(\vartheta_3 F_1 + L_3(C'_1, C'_2)\right)^2$$

$$\text{(A14)}$$

Equation (A14) is a second order equation that may be solved analytically. This analytic solution leads to a specific embodiment of the step 231 as illustrated in **Fig. 14.** This embodiment is advantageous because it allows an analytic expression of the EOTF (inverse of the OETF) and thus of the decoded components of the picture. Moreover, the EOTF is then the square function that is a low complexity process at the decoding side. In step 2310, a module SM obtains a component S by combining the two intermediate chrominance components C'1, C'2 and the first component Y:

$$S = \sqrt{Y + k_0 C'^2_1 + k_1 C'^2_2 + k_2 C'_1\, C'_2}$$

where $k_0$, $k_1$ and $k_2$ are parameters and $C'^2_c$ are the square of a component $C'_c$ (c=1 or 2).

In step 2311, a module LC2 obtains the three solver components Fc by linearly combining the intermediate chrominance component C'1, C'2 and a component S:

$$\begin{bmatrix} F_1 \\ F_2 \\ F_3 \end{bmatrix} = C \begin{bmatrix} S \\ C'_1 \\ C'_2 \end{bmatrix}$$

where C is a 3x3 matrix defined as the inverse of the matrix A.

In step 2312, the three color components Ec are obtained by taking the square of each intermediate color components (Dc):

$$\begin{bmatrix} E_1 \\ E_2 \\ E_3 \end{bmatrix} = \begin{bmatrix} \text{EOTF}(F_1) \\ \text{EOTF}(F_2) \\ \text{EOTF}(F_3) \end{bmatrix} = \begin{bmatrix} (F_1)^2 \\ (F_2)^2 \\ (F_3)^2 \end{bmatrix}$$

The matrix A determines the transform of the picture I to be encoded from the color space (E1, E2, E3), in which the pixel values of the picture to be encoded are represented, to the color space (Y, C1, C2).
Such a matrix depends on the gamut of the HDR picture to be encoded.
For example, when the picture to be encoded is represented in the BT709 gamut as defined by ITU-R Rec. 709, the matrix A is given by:

$$A = \begin{bmatrix} 0.2126 & 0.7152 & 0.0722 \\ -0.1146 & -0.3854 & 0.5 \\ 0.5 & -0.4541 & 0.0459 \end{bmatrix}$$

and the matrix C is given by:

$$C = \begin{bmatrix} 1 & 0 & 1.5748 \\ 1 & -0.1874 & -0.4681 \\ 1 & 1.8556 & 0 \end{bmatrix}$$

According to a variant of this second embodiment, the OEFT is a cube root function and the EOTF is then a cubic function. Then, in step 232 in **Fig. 13b,** the two intermediate components C'1 and C'2 may then be obtained by scaling the two second chrominance components C1 and C2 by the factor $\sqrt[3]{r(L(i)}$:

$$C'1(i) = \frac{C1(i)}{\sqrt[3]{r(L(i)}}$$

$$C'2(i) = \frac{C2(i)}{\sqrt[3]{r(L(i)}}:$$

The EOTF is then a cubic function thus leading to equation (14) on $F_1$ being a more complex third order equation which can be solved analytically by the so-called Cardano's method.

Very complex analytic solutions also exist for the fourth order equation (Ferrari's method), but not anymore for an order higher or equal to five as stated by the Abel-Ruffini theorem.

The decoders BLDEC and ELDEC are configured to decode data which have been encoded by the encoders BLENC and ELENC respectively.

The encoders BLENC and ELENC (and decoders BLDEC and ELDEC) are not limited to specific encoders (decoders) but when an entropy encoder (decoder) is required, an entropy encoder such as a Huffmann coder, an arithmetic coder or a context adaptive coder like CABAC used in H264/AVC or HEVC is advantageous.

According to other embodiments, the ELENC/ELDEC may consist in using SHVC on top of a base layer codec conforming to the H.264/AVC standards (H.264: "Advanced video coding for generic audiovisual services", Recommendation ITU-T H.264, SERIES H: AUDIOVISUAL AND MULTIMEDIA SYSTEMS Infrastructure of audiovisual services - Coding of moving video, January 2012.), or even to the MPEG2 standard (MPEG2: "INFORMATION TECHNOLOGY - GENERIC CODING OF MOVING PICTURES AND ASSOCIATED AUDIO Recommendation H.262", ISO/IEC 13818-2, ISO/IEC JTC1/SC29/WG11 N0702rev, Incorporating N702 Delta of 24 March, 25 March 1994).

Another embodiment may involve the scalable extension of H.264/AVC, called SVC (SVC: same as above: "Overview of the Scalable Video Coding Extension of the H.264/AVC Standard", Heiko Schwarz, Detlev Marpe, and Thomas Wiegand, IEEE TRANSACTIONS ON CIRCUITS AND SYSTEMS FOR VIDEO TECHNOLOGY, VOL. 17, NO. 9, SEPTEMBER 2007).

As said earlier, if SVC is used, the present principles may be advantageous in that it may improve the inter-layer correlation regarding the temporal residual data respectively contained in the base layer and the enhancement layer.

Preferably, the encoders BLENC and ELENC are configured to generate a scalable bitstream F that conforms to the standard SHVC and the decoders BLDEC and ELDEC conforms to the standard SHVC.

On **Fig. 1-14,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the disclosure are implemented using either pure hardware, for example using dedicated hardware such ASIC or FPGA or VLSI, respectively «Application Specific Integrated Circuit », «Field-Programmable Gate Array», «Very Large Scale Integration », or from several integrated electronic components embedded in a device or from a blend of hardware and software components.

**Fig. 15** represents an exemplary architecture of a device 1500 which may be configured to implement a method described in relation with **Fig. 1-14.**

Device 1500 comprises following elements that are linked together by a data and address bus 1501:

- a microprocessor 1502 (or CPU), which is, for example, a DSP (or Digital Signal Processor);
- a ROM (or Read Only Memory) 1503;
- a RAM (or Random Access Memory) 1504;
- an I/O interface 1505 for transmission and/or reception of data, from an application; and
- a battery 1506

According to a variant, the battery 1506 is external to the device. Each of these elements of **Fig. 15** are well-known by those skilled in the art and won't be disclosed further. In each of mentioned memory, the word « register » used in the specification can correspond to area of small capacity (some bits) or to very large area (e.g. a whole program or large amount of received or decoded data). ROM 1503 comprises at least a program and parameters. Algorithm of the methods according to the disclosure is stored in the ROM 1503. When switched on, the CPU 1502 uploads the program in the RAM and executes the corresponding instructions.

RAM 1504 comprises, in a register, the program executed by the CPU 1502 and uploaded after switch on of the device 1500, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment of encoding or encoder, the HDR picture I is obtained from a source. For example, the source belongs to a set comprising:

- a local memory (1503 or 1504), e.g. a video memory or a RAM (or Random Access Memory), a flash memory, a ROM (or Read Only Memory), a hard disk ;
- a storage interface, e.g. an interface with a mass storage, a RAM, a flash memory, a ROM, an optical disc or a magnetic support;
- a communication interface (1505), e.g. a wireline interface (for example a bus interface, a wide area network interface, a local area network interface) or a wireless interface (such as a IEEE 802.11 interface or a Bluetooth® interface); and
- a picture capturing circuit (e.g. a sensor such as, for example, a CCD (or Charge-Coupled Device) or CMOS (or Complementary Metal-Oxide-Semiconductor)).

According to different embodiments of the decoding or decoder, the decoded picture is sent to a destination; specifically, the destination belongs to a set comprising:

- a local memory (1503 or 1504), e.g. a video memory or a RAM (or Random Access Memory), a flash memory, a ROM (or Read Only Memory), a hard disk ;
- a storage interface, e.g. an interface with a mass storage, a RAM, a flash memory, a ROM, an optical disc or a magnetic support;
- a communication interface (1505), e.g. a wireline interface (for example a bus interface, a wide area network interface, a local area network interface) or a wireless interface (such as a IEEE 802.11 interface or a Bluetooth® interface); and
- a display.

According to different embodiments of encoding or encoder, the bitstream BF and/or F are sent to a destination. As an example, one of bitstream F and BF or both bitstreams F and BF are stored in a local or remote memory, e.g. a video memory (1504) or a RAM (1504), a hard disk (1503). In a variant, one or both bitstreams are sent to a storage interface, e.g. an interface with a mass storage, a flash memory, ROM, an optical disc or a magnetic support and/or transmitted over a communication interface (1505), e.g. an interface to a point to point link, a communication bus, a point to multipoint link or a broadcast network.

According to different embodiments of decoding or decoder, the bitstream BF and/or F is obtained from a source. Exemplarily, the bitstream is read from a local memory, e.g. a video memory (1504), a RAM (1504), a ROM (1503), a flash memory (1503) or a hard disk (1503). In a variant, the bitstream is received from a storage interface, e.g. an interface with a mass storage, a RAM, a ROM, a flash memory, an optical disc or a magnetic support and/or received from a communication interface (1505), e.g. an interface to a point to point link, a bus, a point to multipoint link or a broadcast network.

According to different embodiments, device 1500 being configured to implement an encoding method described in relation with **Fig. 1, 4-9,** belongs to a set comprising:

- a mobile device ;
- a communication device ;
- a game device ;
- a tablet (or tablet computer) ;

- a laptop ;
- a still picture camera;
- a video camera ;
- an encoding chip;
- a still picture server; and
- a video server (e.g. a broadcast server, a video-on-demand server or a web server).

According to different embodiments, device 1300 being configured to implement a decoding method described in relation with **Fig. 2, 10-14,** belongs to a set comprising:

- a mobile device ;
- a communication device ;
- a game device ;
- a set top box;
- a TV set;
- a tablet (or tablet computer) ;
- a laptop ;
- a display and
- a decoding chip.

According to an embodiment illustrated in **Fig. 16,** in a transmission context between two remote devices A and B over a communication network NET, the device A comprises means which are configured to implement a method for encoding an picture as described in relation with the **Fig. 1, 4-9** and the device B comprises means which are configured to implement a method for decoding as described in relation with **Fig. 2, 10-14.**

According to a variant of the disclosure, the network is a broadcast network, adapted to broadcast still pictures or video pictures from device A to decoding devices including the device B.

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and any other device for processing a picture or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of encoding both a high dynamic range (HDR) picture ($I_{HDR}$) and a first standard dynamic range (SDR) picture ($I_{SDR1}$) into a scalable bitstream (F) having a base layer and an enhancement layer, the method comprising:

    - encoding (1030) said first SDR picture ($I_{SDR1}$) in the base layer of the scalable bitstream (F);
    - obtaining (1000) a second SDR picture ($I_{SDR2}$) from the HDR picture by reducing the dynamic of the HDR picture ($I_{HDR}$);
    - encoding (ELENC), in the enhancement layer of the scalable bitstream (F), the second SDR picture by using a predictor obtained from a decoded version of the first SDR picture ($I_{SDR1}$),

    **characterized in that** it further comprises:

    - mapping (12) a luminance component (L) and chrominance (C1, C2) components obtained from the HDR picture onto a second luminance component (L") and two second chrominance components (C"1, C"2) in order that the gamut of colors obtained from said second luminance (L") and chrominance (C"1, C"2) components maps onto the gamut of the colors of the HDR picture to be encoded.

2. The method of claim 1, wherein mapping (12) the luminance (L) and chrominance (C1, C2) components onto a second luminance component (L") and two second chrominance components (C"1, C"2) comprises:

    - obtaining the two second chrominance components (C"1, C"2) by scaling (121) each of the two chrominance components (C1, C2) by a first factor ($\beta^{-1}(Ba, L(i))$) that depends on a modulation value (Ba), obtained from the luminance component (L), and the value of each pixel **(i)** of the luminance component (L); and
    - obtaining (122) the second luminance component (L") by linearly combining the luminance component (L) and the two second chrominance components (C"1, C"2).

3. The method of claim 2, wherein the values of the second luminance component (L") are lower than the corresponding values of the luminance component (L).

4. The method of claim 2 or 3, wherein linearly combining the luminance component (L) and the two second chrominance components (C"1, C"2) uses coefficients (m, n) which are added to a bitstream.

5. A method of one of the claims 1-4, wherein obtaining (11) a luminance component (L) and two chrominance components (C1, C2) from the HDR picture to be encoded comprises:

    - obtaining (130) a luminance component (L) by applying a non-linear function, that depends on a modulation value obtained from the luminance (Y) of the HDR picture, on the luminance (Y) of the HDR picture, in order that the dynamic of said luminance component (L) is reduced compared to the dynamic of the luminance (Y) of the HDR picture;
    - obtaining two chrominance components (C1, C2) by:

        - obtaining (150) at least one intermediate color component (E'c) by scaling each color component (Ec) of the HDR picture to be encoded ($I_{HDR}$) by a second factor (r(L)) that depends on the luminance component (L); and
        - obtaining (170) said two chrominance components (C1, C2) from said at least one intermediate color component (E'c).

**6.** The method of one of the claims 2-5, wherein the first factor ($\beta^{-1}$ (Ba, L(i))) is obtained by minimizing a gamut distortion calculated between the gamut of the colors obtained from the second luminance (L") and chrominance (C"1, C"2) components and the gamut of the colors of the HDR picture to be encoded.

**7.** The method of claim 5 or 6, wherein the luminance (Y) of the HDR picture is divided by the modulation value (Ba) before applying the non-linear function on the luminance (Y) of the HDR picture.

**8.** The method of one of the claims 5-7, wherein the non-linear function is either a gamma curve or a Slog curve.

**9.** The method of one of the claims 5-8, wherein the second factor (r(L)) is a ratio of the luminance component (L) over the luminance (Y) of the HDR picture.

**10.** The method of one of the claims 5-9, wherein obtaining (170) said two chrominance components (C1, C2) from said at least one intermediate color component (E'c) comprises:

- obtaining (171) three intermediate components (Dc) by taking the square-root of each intermediate color component (E'c); and
- linearly combining (172) the three intermediate components (Dc).

**11.** A method of decoding a high dynamic range (HDR) picture ($I_{HDR}$) from a scalable bitstream (F) having a base layer and an enhancement layer, the method comprising:

- decoding (2030) a first standard dynamic range (SDR) picture ($I_{SDR1}$) from the base layer of the scalable bitstream (F);
- decoding a second SDR picture ($I_{SDR2}$) by decoding the enhancement layer of the scalable bitstream (F) and by using a predictor obtained from said decoded first SDR picture ($I_{SDR1}$); and
- obtaining the HDR picture from said second SDR picture ($I_{SDR2}$) by increasing the dynamic of the second SDR picture ($I_{SDR2}$);

**characterized in that** obtaining the HDR picture from said second SDR picture ($I_{SDR2}$) comprises:

- obtaining (22) a second luminance component (L) and two second chrominance components (C1, C2) for the HDR picture by applying an inverse mapping on the colors obtained from a luminance (L") component and two chrominance components (C"1,C"2) obtained from the second SDR picture ($I_{SDR2}$); and
- obtaining (23) at least one color component (Ec) of the HDR picture to be decoded from said second luminance (L) component and said two second chrominance (C1, C2) components.

**12.** The method of claim 11, wherein obtaining (22) a second luminance component (L) and two second chrominance components (C1, C2) comprises:

- obtaining (222) the second luminance component (L) by linearly combining the luminance component (L") and the two chrominance components (C"1, C"2); and
- obtaining (221) the two second chrominance components (C1, C2) by scaling each of the two chrominance components (C"1, C"2) by a first factor ($\beta$ (Ba, L"(i)) ) that depends on both a modulation value (Ba) and the value of each pixel i of the second luminance component (L).

**13.** The method of claim 12, wherein linearly combining the second luminance component (L) and the two second chrominance components (C1, C2) used coefficients (m, n) which are obtained from a bitstream.

**14.** The method of claim 12 or 13, wherein the values of the second luminance component (L) are higher than the corresponding values of the luminance component (L").

**15.** The method of one of the claims 11-13, wherein obtaining (23) at least one color component (Ec) of the HDR picture to be decoded from said second luminance (L) component and said two second chrominance (C1, C2) components comprises:

- obtaining (220) a first component (Y) by applying a non-linear function to a second luminance component (L), obtained (210) from the scalable bitstream, in order that the dynamic of said first component (Y) is increased compared to the dynamic of the second luminance component (L); and
- obtaining (230) at least one color component (Ec) from said first component (Y), two chrominance component (C1, C2) obtained from the scalable bitstream and from a second factor (r(L)) that depends on the second luminance component (L).

16. The method of claim 15, wherein obtaining (230) at least one color component (Ec) comprises:

- obtaining (231) three intermediate color components (E'c) from said first component (Y) and the two second chrominance components (C1, C2); and
- obtaining (232) said at least one color component (Ec) by scaling each intermediate color component (E'c) by the second factor (r(L)).

17. The method of claim 15, wherein obtaining (230) at least one color component (Ec) comprises:

- obtaining (232) two intermediate chrominance components (C'1, C'2) by scaling each second chrominance component (C1, C2) according to the second factor (r(L)); and
- obtaining (231) said at least one color component (Ec) from said first component (Y) and said two intermediate chrominance components (C'1, C'2).

18. The method of claim 17, wherein obtaining (230) at least one color component (Ec) comprises:

- obtaining (232) two intermediate chrominance component (C'1, C'2) by scaling each second chrominance component (C1, C2) by a value equals to the square root of the second factor; and
- obtaining (231) said at least one color component (Ec) by:

    - obtaining (2310) a second component (S) by combining the two intermediate chrominance components (C'1, C'2) and the first component (Y);
    - obtaining (2311) at least one intermediate color component (Dc) by linearly combining the intermediate chrominance component (C'1, C'2) and said second component (S); and
    - obtaining (2312) the three color components (Ec) by taking the square of each intermediate color components (Dc).

19. The method of one of the claims 15-18, wherein the second luminance component (L) is multiplied by the modulation value (Ba) after having applied the non-linear function on the second luminance component (L).

20. The method of one of the claims 15-19, wherein the non-linear function is the inverse of either a gamma curve or a Slog curve.

21. The method of one of the claims 15-20, wherein the second factor (r(L)) is a ratio of the second luminance component (L) to the first component (Y).

22. A device of encoding both a high dynamic range (HDR) picture and a first standard dynamic range (SDR) picture into a scalable bitstream having a base layer and an enhancement layer, the device comprising a processor configured to:

- encode said first SDR picture in the base layer of the scalable bitstream;
- obtain a second SDR picture from the HDR picture by reducing the dynamic of the HDR picture;
- encode, in the enhancement layer of the scalable bitstream, the second SDR picture by using a predictor obtained from a decoded version of the first SDR picture,

**characterized in that** the processor is further configured to:

- map a luminance component and chrominance components obtained from the HDR picture onto a second luminance component and two second chrominance components in order that the gamut of colors obtained from said second luminance and chrominance components maps onto the gamut of the colors of the HDR picture to be encoded.

23. A device of decoding a high dynamic range (HDR) picture from a scalable bitstream having a base layer and an enhancement layer, the device comprising a processor configured to:

- decode a first standard dynamic range (SDR) picture from the base layer of the scalable bitstream;
- decode a second SDR picture by decoding the enhancement layer of the scalable bitstream and by using a predictor obtained from said decoded first SDR picture; and
- obtain the HDR picture from said second SDR picture by increasing the dynamic of the second SDR picture;

**characterized in that** the processor is further configured to obtain the HDR picture from said second SDR picture by:

- obtaining a second luminance component and two second chrominance components for the HDR picture by applying an inverse mapping on the colors obtained from a luminance component and two chrominance components obtained from the second SDR picture; and
- obtaining at least one color component of the HDR picture to be decoded from said second luminance component and said two second chrominance components.

24. A computer program product comprising program code instructions to execute the steps of the encoding method according to claim 1 when this program is executed on a computer.

25. A computer program product comprising program code instructions to execute the steps of the decoding method according to claim 11 when this program is executed on a computer.

26. A processor readable medium having stored therein instructions for causing a processor to perform at least the steps of the encoding method according to claim 1.

27. A processor readable medium having stored therein instructions for causing a processor to perform at least the steps of the decoding method according to claim 11.

28. Non-transitory storage medium carrying instructions of program code for executing steps of the method according to one of claims 1 to 21, when said program is executed on a computing device.

EP 3 099 073 A1

**Fig. 1 – Prior Art**

**Fig. 2 - Prior Art**

30

**Fig. 3**

**Fig. 4**

**Fig. 5**

**Fig. 6**

11

**Fig. 7**

170

**Fig. 8**

170

**Fig. 9**

2040

F  (L",C"1, C"2) → IGM (L, C1, C2) → INVC → Ec

22  23

BF ── m ,n

BF

Ba, Inf, a,b, c or γ

**Fig. 10**

22

β  (Ba, L(i))

(C"1, C"2) ────── ⊗ C1, C2

221

222

L" ────── ILCC ── L

m,n

**Fig. 11**

23

Ba, Inf, a,b, c or γ

L → IFM → RM  160

220  Y  r(L)

C1, C2 ────── ILC ── Ec

230

**Fig. 12**

**Fig. 13a**

**Fig. 13b**

**Fig. 14**

**Fig. 15**

**Fig. 16**

**Fig. 17**

Europäisches
Patentamt

European
Patent Office

Office européen
des brevets

# EUROPEAN SEARCH REPORT

Application Number

EP 15 30 5795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LASSERRE S ET AL: "Single layer low-bit depth EDR video coding with SDR/HDR backward compatibilities", 111. MPEG MEETING; 6-2-2015 - 20-2-2015; GENEVA; (MOTION PICTURE EXPERT GROUP OR ISO/IEC JTC1/SC29/WG11),, no. m36083, 17 February 2015 (2015-02-17), XP030064451, * figures 4, 5 * * section 1.3. * * section 2.1. * | 1-28 | INV. H04N19/30 H04N19/98 |
| Y | BORDES PHILIPPE ET AL: "Color Gamut Scalable Video Coding For SHVC", 2013 PICTURE CODING SYMPOSIUM (PCS), IEEE, 8 December 2013 (2013-12-08), pages 301-304, XP032567015, DOI: 10.1109/PCS.2013.6737743 [retrieved on 2014-02-11] * figures 1, 2 * * sectino II * | 1-28 | |
| Y | Sébastien Lasserre ET AL: "Single layer low-bit depth EDR video coding with SDR/HDR backward compatibilities (m36083) - Presentation Slides", 111. MPEG MEETING; 6-2-2015 - 20-2-2015; GENEVA; (MOTION PICTURE EXPERT GROUP OR ISO/IEC JTC1/SC29/WG11),, 17 February 2015 (2015-02-17), XP055224796, Retrieved from the Internet: URL:http://wg11.sc29.org/ [retrieved on 2015-10-30] * slide 4 and 5 * | 3-5, 13-17 | TECHNICAL FIELDS SEARCHED (IPC) H04N |

-/--

The present search report has been drawn up for all claims

| Place of search | Date of completion of the search | Examiner |
|---|---|---|
| The Hague | 3 November 2015 | Wedi, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**

**European Patent Office**

**Office européen des brevets**

# EUROPEAN SEARCH REPORT

Application Number

EP 15 30 5795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LE LÃ CR ANNEC F ET AL: "Usage of modulation channel for high bit-depth signal encoding", 18. JCT-VC MEETING; 30-6-2014 - 9-7-2014; SAPPORO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-R0267, 26 June 2014 (2014-06-26), XP030116574, * figures 5, 6 * * section 3 * | 8,9,20, 21 | |
| A | Fabrice Le Léannec ET AL: "Modulation channel information SEI message (JCTVC-R0139r2)", , 2 July 2014 (2014-07-02), XP055225001, Retrieved from the Internet: URL:http://phenix.int-evry.fr/jct/doc_end_user/documents/18_Sapporo/wg11/JCTVC-R0139-v6.zip [retrieved on 2015-11-02] * abstract * * section 2 * | 1-28 | TECHNICAL FIELDS SEARCHED (IPC) |

The present search report has been drawn up for all claims

| Place of search | Date of completion of the search | Examiner |
|---|---|---|
| The Hague | 3 November 2015 | Wedi, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## REFERENCES CITED IN THE DESCRIPTION

**Non-patent literature cited in the description**

- *Rec. ITU-R BT.709-5,* April 2002
- *ITU-R BT.2020 OETF,* June 2014
- **DANNY PASCALE.** *A Review of RGB Color Spaces*
- High Efficiency Video Coding. *SERIES H: AUDIOVISUAL AND MULTIMEDIA SYSTEMS, Recommendation ITU-T H.265, Telecommunication Standardization Sector of ITU,* October 2014
- SMPTE standard: High Dynamic Range Electro-Optical Transfer Function of Mastering Reference Displays. *SMPTE ST 2084,* 2014
- **P. BORDES et al.** Color Gamut Scalable Video Coding for SHVC. *PCS , IEE,* 2013
- **YAN YE ; ANDRIVON, P.** The Scalable Extensions of HEVC for Ultra-High-Definition Video Delivery. *MultiMedia, IEEE,* vol. 21 (3

- **HEIKO SCHWARZ ; DETLEV MARPE ; THOMAS WIEGAND.** H.264/AVC Standard. *IEEE TRANSACTIONS ON CIRCUITS AND SYSTEMS FOR VIDEO TECHNOLOGY,* September 2007, vol. 17 (9
- Advanced video coding for generic audiovisual services. *ecommendation ITU-T H.264, SERIES H: AUDIOVISUAL AND MULTIMEDIA SYSTEMS Infrastructure of audiovisual services - Coding of moving video,* January 2012
- INFORMATION TECHNOLOGY - GENERIC CODING OF MOVING PICTURES AND ASSOCIATED AUDIO Recommendation H.262. *ISO/IEC 13818-2, ISO/IEC JTC1/SC29/WG11 N0702rev,* 25 March 1994
- **HEIKO SCHWARZ ; DETLEV MARPE ; THOMAS WIEGAND.** Overview of the Scalable Video Coding Extension of the H.264/AVC Standard. *IEEE TRANSACTIONS ON CIRCUITS AND SYSTEMS FOR VIDEO TECHNOLOGY,* September 2007, vol. 17 (9